(19) Europäisches Patentamt
European Patent Office
Office européen des brevets

(11) **EP 3 156 163 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **15186457.6**

(22) Anmeldetag: **23.09.2015**

(51) Internationale Patentklassifikation (IPC):
**B23H 9/00** (2006.01) **A61C 5/42** (2017.01)

(52) Gemeinsame Patentklassifikation (CPC):
**B24B 19/04; A61C 5/42; B23H 9/00;**
A61C 2201/007

(54) **VERFAHREN ZUR HERSTELLUNG VON ROHLINGEN FÜR ENDODONTISCHE INSTRUMENTE SOWIE DERARTIGE ROHLINGE**

METHOD FOR PRODUCING BLANKS FOR ENDODONTIC INSTRUMENTS AND SUCH BLANKS

PROCEDE DE FABRICATION D'EBAUCHES POUR INSTRUMENTS ENDODONTIQUES ET EBAUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.04.2017 Patentblatt 2017/16**

(73) Patentinhaber: **Coltène/Whaledent GmbH + Co. KG**
**89129 Langenau (DE)**

(72) Erfinder: **Mannschedel, Werner**
**89129 Langenau (DE)**

(74) Vertreter: **Hepp Wenger Ryffel AG**
**Friedtalweg 5**
**9500 Wil (CH)**

(56) Entgegenhaltungen:
**FR-A1- 3 009 947    US-A1- 2006 185 169**
**US-B2- 7 207 111**

**Beschreibung**

Die Erfindung betrifft ein Verfahren zur Herstellung von Rohlingen für endodontische Instrumente, Rohlinge sowie endodontische Instrumente.

Zahnärzte verwenden unterschiedliche Arten von endodontischen Instrumenten für die Reinigung und Weitung von Wurzelkanälen. Typischerweise macht der Zahnarzt einen Zugang zum Wurzelkanal durch die Oberfläche eines zu behandelnden Zahns. Im Anschluss daran wird der Wurzelkanal mit endodontischen Instrumenten wie Feilen oder Reiben gereinigt und geweitet. Der derart präparierte Wurzelkanal wird durch den Zahnarzt mit einem Füllmaterial befüllt und schliesslich versiegelt.

Für die Bearbeitung des Wurzelkanals steht dem Zahnarzt eine Reihe von flexiblen Feilen zur Verfügung, welche jeweils einen Griff aufweisen. Die Feilen weisen unterschiedliche Durchmesser auf, um den Wurzelkanal schrittweise zu reinigen bzw. zu weiten. Über die Länge des endodontischen Instruments finden sich typischerweise spiralförmige und nicht-spiralförmige Rillen oder Nuten und Schneidkanten, welche für eine Schneidwirkung sorgen. Herkömmliche endodontische Instrumente werden hergestellt, indem ein Stab kontinuierlich verdrillt wird. Auf diese Weise bilden sich Schneidkanten an der Oberfläche aus. Alternativ wird zur Herstellung endodontischer Instrumente eine Stange in einer rotierenden Schleifmaschine bearbeitet. Auf diese Weise werden spiralförmige und nicht-spiralförmige Rillen oder Nuten und Schneidkanten entlang der Länge des Instruments eingebracht. Die genannten Verfahren sind zeit- und kostenintensiv, und es lassen sich nur eine beschränkte Anzahl von Oberflächenausgestaltungen herstellen.

US 6,149,501 beschreibt ein Verfahren für die Herstellung von hochelastischen endodontischen Instrumenten, wobei sich ein Rohling vor dem Verdrillens in der Austenitphase des Materials befindet. Das Material geht während des Verdrillens in die Martensitphase über. Das Verfahren umfasst Arbeitsschritte im Hochtemperaturbereich und in Flüssigkeiten, welche auch korrodierende Effekte auf das Material ausüben; es ist daher mit einigen Nachteilen behaftet.

US 7,207,111 B2 beschreibt Verfahren für die Herstellung von endodontischen Instrumenten gemäß dem Oberbegriff des Anspruchs 1, wobei mit einem Verdrillen im Niedertemperaturbereich spiralförmige Rillen oder Nuten und Schneidkanten geformt werden. Rillen oder Nuten und Schneidkanten können auch mittels EDM-Verfahren (electrical discharge machining) in das endodontische Instrument eingebracht werden. Erodiertes Material lagert sich dabei wieder an das Instrument an und weist eine Härte von mindestens 15% grösser als das Ausgangsmaterial auf. Das hat sich bei der Benutzung des Instruments als mechanisch nachteilig herausgestellt.

US 7 207 111 B2 beschreibt Verfahren zur Herstellung endodontischer Instrumente mit entweder spiralförmigen oder nicht helikalen Flöten.

Aufgabe der Erfindung ist es, die Nachteile des Stands der Technik zu überwinden. Insbesondere ist es eine Aufgabe der Erfindung, ein Verfahren zur Herstellung von Rohlingen für endodontische Instrumente zur Verfügung zu stellen, mit dem die Rohlinge schnell und kosteneffizient und mit vorteilhaften Eigenschaften hinsichtlich Stabilität und Funktionalität hergestellt werden können.

Diese Aufgabe wird durch die Merkmale des unabhängigen Anspruchs 1 gelöst.

Die Erfindung betrifft ein Verfahren zur Herstellung von Rohlingen für endodontische Instrumente. Das Verfahren umfasst den Schritt des Bereitstellens mindestens einer Stange insbesondere mit einer Länge im Bereich von 1 bis 15 m, bevorzugt 2 bis 10 m, besonders bevorzugt 3 bis 4 m. Des Weiteren umfasst das Verfahren den Schritt des Bearbeitens der wenigstens einen Stange mittels Drahterodiertechnik, wobei ein Erodiermuster auf die mindestens eine Stange aufgebracht wird. Während des Bearbeitens mittels der Drahterodiertechnik wird Material von der Stange wegerodiert. So kann ein Muster mit Kanten, insbesondere Schneidkanten, auf der mindestens einen Stange erzeugt werden, das die mechanische Bearbeitung eines Wurzelkanals erlaubt. Bei der Drahterodiertechnik lagert sich das von der mindestens einen Stange wegerodierte Material mindestens partiell als Schicht wieder an die mindestens eine Stange an. Die Schicht des angelagerten Materials weist hierbei eine Oberflächenhärte auf, die im Wesentlichen der Härte des Materials der mindestens einen Stange entspricht.

Die Einstellung der Oberflächenhärte einer mittels Drahterodiertechnik erhaltenen Schicht ist mit fachüblichen Routinemassnahmen durch geeignete Wahl der Verfahrensparameter möglich. Insbesondere ist die Oberflächenhärte einer mittels Drahterodiertechnik erhaltenen Schicht durch die Flüssigkeit des Erodierbads einstellbar. Die Flüssigkeit des Erodierbads kann entionisiertes Wasser oder Öle, insbesondere mineralische Öle, hochmolekulare Kohlenwasserstoffe, Silikon-Öle, synthetische oder natürliche Ester, umfassen. Gängige Flüssigkeiten des Erodierbads, bzw. Zusammensetzungen der Flüssigkeit des Erodierbads, sind dem Fachmann bekannt.

Auf diese Weise werden Rohlinge kosten- und zeiteffizient hergestellt. Insbesondere vorteilhaft ist, dass die Schicht des angelagerten Materials im fertigen endodontischen Instrument bei mechanischer Beanspruchung, beispielsweise beim Bearbeiten eines Wurzelkanals, nicht zum Abplatzen neigt. Es hat sich überraschend herausgestellt, dass entgegen der Lehre im Stand der Technik eine im Wesentlichen gleiche Härte zwischen Material der Stange und der Schicht des angelagerten Materials hierfür besonders vorteilhaft ist. Zudem kann aufgrund der (im Querschnitt) gleichmässigeren Härte des Rohlings ein sehr homogenes Biegeverhalten bzw. besonders homogene elastische Eigenschaften erzielt werden.

Die verwendete Stange bzw. die verwendeten Stangen können auch hohle Stangen (Rohre) sein. Derart kann im fertiggestellten endodontischen Instrument Flüssigkeit, insbesondere Spülflüssigkeit, zentral in den Wurzelkanal eingebracht werden.

Das Material der Stangen kann ausgewählt sein aus den folgenden Materialien: $\alpha$-Titan-Legierungen; $\beta$-Titan-Legierungen; $\alpha,\beta$-Titan-Legierungen; Nickel-Titan-Legierungen, insbesondere stöchiometrische NiTi Legierungen bzw. näherungsweise equiatomare NiTi Legierungen wie bspw. 50.8%Ti¦49.2%Ni, 46%Ti¦54%Ni. NiTi Legierungen können weiterhin Zusätze ausgewählt aus der Gruppe bestehend aus Niob, Kupfer, Chrom, Kobalt, Hafnium, Vanadium und Palladium enthalten. Ein Anteil von mindestens 40 Atomprozent Ti ist jedenfalls bevorzugt. Mit derartigen Materialien weist der Rohling und auch das fertige endodontische Instrument hochelastische Eigenschaften auf.

Die Schicht des angelagerten Materials weist eine Oberflächenhärte auf, die im Wesentlichen 0 bis 8%, bevorzugt 0 bis 5%, härter als die Härte des Materials der mindestens einen Stange ist.

Die Oberflächenhärte wird im Rahmen der Erfindung insbesondere mit dem Verfahren der Nanonindentierung bestimmt. Dabei wird ein Indenter mit einer gewissen Kraft in das Material eingedrückt. Zur Auswertung wird der RDR-Wert (remnant depth ratio) herangezogen. Dieser beschreibt das Verhältnis der verbleibenden Eindringtiefe $h_{ver}$ zur maximalen Eindringtiefe $h_{max}$:

$$RDR \equiv \frac{h_{ver}}{h_{max}}$$

Mit dem Bearbeiten mittels Drahterodiertechnik kann mindestens ein weiteres Erodiermuster auf der mindestens einen Stange aufgebracht werden. Dabei ist das mindestens eine weitere Erodiermuster derart ausgestaltet, dass es bei bestimmungsgemässen Gebrauch des endodontischen Instruments eine andere Wirkung, insbesondere Schneidwirkung, erzeugt als das erste Erodiermuster. Das zweite Erodiermuster kann insbesondere reziprok zum ersten Erodiermuster ausgebildet sein. Entsprechend führt das erste Erodiermuster bzw. dessen Schneidkanten eine Schneidfunktion beim Eindrehen in einen Wurzelkanal aus und das zweite Erodiermuster bzw. dessen Schneidkanten führt eine Schneidfunktion beim Herausdrehen, bzw. beim Bewegen in die rückläufige Richtung, aus einem Wurzelkanal aus. Derart wird der Wurzelkanal effizient gereinigt und geweitet. Insbesondere können beispielsweise zwei oder drei Kanten, insbesondere Schneidkanten, konzipiert sein, die in der Vorwärtsbewegung, also beim Eindrehen in den Wurzelkanal, eine Schneidfunktion ausüben und eine Kante, insbesondere Schneidkante, die in der Rückwärtsbewegung eine Schneidfunktion ausübt. Auf diese Weise wird das Instrument bei der Rückwärtsbewegung mechanisch geringer beansprucht. Selbstverständlich sind auch anderen Anzahlen der Kanten, insbesondere Schneidkanten, denkbar.

Vorteilhafterweise können in dem Verfahren mehrere Stangen gleichzeitig erodiert werden. Derart ist der Herstellungsprozess beschleunigt und die Herstellungskosten werden verringert.

Nach dem Schritt des Bearbeitens der einen oder der mehreren Stangen mittels Drahterodiertechnik, wobei ein Erodiermuster auf die eine oder die mehreren Stangen aufgebracht wird, kann ein Nachbehandeln der einen oder der mehreren Stangen erfolgen. Dies kann mittels Elektropolieren, chemischem Polieren, Hitzebehandlung zum Einstellen der Elastizität und/oder Härte, oder Auftragen einer Beschichtung insbesondere umfassend diamond-like carbon (DLC) und/oder Bornitrid erfolgen. Die vorgenannten Nachbehandlungen können einzeln oder in Kombination durchgeführt werden. Prinzipiell kann jede Nachbehandlungsart angewendet werden, die zu einer Veränderung der Eigenschaften des Rohlings, insbesondere der Schneidkanten des Rohlings, führt.

Selbstverständlich kann die eine oder die mehreren Stangen auch vorbehandelt werden, bevor sie dem Verfahren zugeführt wird. Typische Vorbehandlungen der einen oder der mehreren Stangen dienen der Reinigung und/oder der Inaktivierung der Oberfläche. Auf diese Weise kann das Anlagern des wegerodierten Materials im erfindungsgemässen Verfahren an die eine oder die mehreren Stangen verbessert werden.

Nach dem Schritt des Bearbeitens der einen oder der mehreren Stangen mittels Drahterodiertechnik, wobei ein Erodiermuster auf die eine oder die mehreren Stangen aufgebracht wird, kann die mindestens eine Stange oder können die mehreren Stangen abgelängt werden. Derart wird der Rohling auf die für die bestimmungsgemässe Benutzung erforderliche Länge gebracht und zu einem endodontischen Instrument weiterverarbeitet werden. Die Weiterverarbeitung kann im einfachsten Fall nur noch die Anbringung eines Griffteils bedeuten. Eine weitergehende Bearbeitung (wie bspw. das Verdrillen) des eigentlichen endodontischen Wirkbereichs ist nicht mehr nötig, wodurch das Verfahren erheblich vereinfacht wird.

Ein weiterer Aspekt der Erfindung betrifft einen Rohling für ein endodontisches Instrument. Dieser Rohling ist mit einem Verfahren wie vorgängig erläutert erhältlich. Derart wird ein kosteneffizient hergestellter Rohling bereitgestellt, welcher die oben erwähnten Vorteile aufweist.

Des Weiteren betrifft die Erfindung ein endodontisches Instrument, welches aus einem Rohling wie vorgängig beschrieben herstellbar ist. Das endontische Instrument weist weiter eine Anbringvorrichtung (bspw. für eine mechanische (Geräte oder Maschinen-)Halterung) und/oder eine Haltevorrichtung, insbesondere einen Handgriff, auf. Das endontische Instrument ist mechanisch stabiler als herkömmliche endodontische Instrumente, insbesondere neigt die aufgelagerte Schicht aufgrund der im Wesentlichen gleichen Materialhärte mit dem Körper des Instruments überraschenderweise nicht zum Abplatzen. Dies bezieht sich selbstverständlich auf die bestimmungsgemässe Verwendung des endodontischen Instruments beispielsweise im Rahmen einer Wurzelbehandlung. Die Anbringvorrichtung und/oder Haltevorrichtung, insbesondere der Griff, ermöglichen das Anbringen des Instruments an einer Vorrichtung beispielsweise während einer Wurzelbehandlung und oder das Greifen des Instruments mit den Händen.

Ein weiterer Aspekt der Erfindung betrifft eine Zuführvorrichtung, welche derart ausgestaltet ist, dass mehrere Stangen in eine Erodiervorrichtung zur Durchführung eines Verfahrens wie vorgängig erläutert gleichzeitig oder nacheinander zuführbar sind. Vorteilhafterweise ermöglicht die Zuführvorrichtung in Kombination mit einer Vorrichtung für die Drahterodiertechnik das Einbringen von einem oder mehreren Erodiermustern auf mehreren Stangen. Derart können die vorgängig beschriebenen Vorteile besonders einfach und rationell verwirklicht.

Die Stangen können in der Zuführvorrichtung insbesondere um 360° und mehr (insbesondere ganzzahlige Vielfache davon) um die Längsachse der Stangen gedreht werden. Auch Wechsel der Drehrichtungen sind möglich, um spezielle (bspw. gegenläufige) Erodiermuster zu bewirken.

Die Erfindung wird im Folgenden anhand einer Abbildung und anhand von Messergebnissen erläutert.

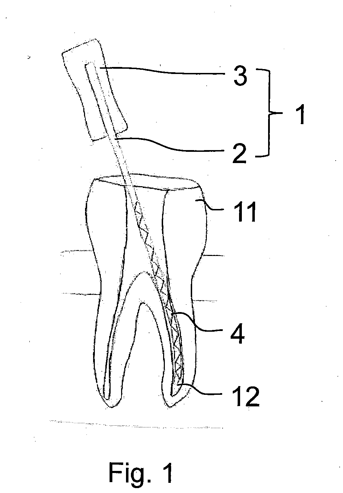

Figur 1:    Schemazeichnung eines endodontischen Instruments im Wurzelkanal eines Zahns

Figur 1 zeigt ein endodontisches Instrument 1 bei der Behandlung eines Backenzahns 11. Hierbei ist das endodontische Instrument 1 partiell in einen Wurzelkanal 12 des Zahns 11 eingeführt. Durch Rotations- und Translationsbewegungen wird der Wurzelkanal 12 gereinigt, d.h. die Wurzel wird aus dem Wurzelkanal 12 entfernt, und geweitet. Das endodontische Instrument 1 umfasst einen Griff 3 und einen Körper 2. Der Körper 2 ist aus einer Nickel-TitanLegierung gefertigt und weist mindestens ein Erodiermuster 4 auf. Das Erodiermuster 4 wurde in einem Drahterodier-Verfahren eingebracht. Das Erodiermuster 4 wird dabei u.a. durch die Anlagerung von wegerodiertem Material gebildet. Das Erodiermuster 4 weist Schneidkanten auf, die im bestimmungsgemässen Gebrauch eine Schneidfunktion ausführen.

Die Härte der Instrumente wurde mit dem Verfahren der Nanonindentierung bestimmt (Maximalkräfte von 10mN und 30mN). Zur Auswertung wurde der RDR-Wert (remnant depth ratio) ermittelt sowie $h_{max}$, $h_{ver}$ und der E-Modul. Es konnte bei erfindungsgemässen Werkstücken kein signifikanter Härteunterschied zwischen EDM behandelten und nicht mit EDM behandelten Bereichen ermittelt werden. Im endodontischen Anwendungsfall zeigten erfindungsgemässe Instrumente hervorragende, homogene Biege- bzw. Elastizitätseigenschaften, ohne jegliches Abplatzen von Oberflächenmaterial auch bei intensiver, längerer Beanspruchung.

## Patentansprüche

1.  Verfahren zur Herstellung von Rohlingen für endodontische Instrumente (1), umfassend die Schritte

    i)Bereitstellen mindestens einer Stange (2), insbesondere mit einer Länge im Bereich von 1 bis 15 m, bevorzugt 2 bis 10 m, besonders bevorzugt 3 bis 4 m;
    ii) Bearbeiten der wenigstens einen Stange (2) mittels Drahterodiertechnik, wobei ein Erodiermuster (4) auf die mindestens eine Stange (2) aufgebracht wird,

    **dadurch gekennzeichnet, dass** von der mindestens einen Stange (2) wegerodiertes Material mindestens partiell als Schicht wieder an die mindestens eine Stange (2) angelagert wird, und wobei die Schicht des wieder angelagerten Materials eine Oberflächenhärte aufweist, die im Wesentlichen 0 bis 8% härter als die Härte des Materials der mindestens einen Stange ist.

2.  Verfahren gemäss einem der Ansprüche 1 oder 2, wobei mindestens ein weiteres Erodiermuster auf der mindestens einen Stange (2) aufgebracht wird, wobei das mindestens eine weitere Erodiermuster derart ausgestaltet ist, dass es bei bestimmungsmässigem Gebrauch des endodontischen Instruments (1) eine andere Wirkung, insbesondere Schneidwirkung, erzeugt als das erste Erodiermuster (4).

3.  Verfahren gemäss einem der vorhergehenden Ansprüche,
    **dadurch gekennzeichnet, dass** mehrere Stangen (2) gleichzeitig erodiert werden.

4.  Verfahren gemäss einem der vorhergehenden Ansprüche, umfassend nach dem Schritt ii) ein Nachbehandeln der einen oder der mehreren Stangen (2) mittels

    - Elektropolieren; und/oder
    - chemischem Polieren; und/oder
    - Hitzebehandlung zum Einstellen der Elastizität; und/oder
    - Auftragen einer Beschichtung insbesondere umfassend di-amond-like Carbon (DLC) und/oder Bornitrid.

5.  Verfahren gemäss einem der vorhergehenden Ansprüche, umfassend nach dem Schritt ii) ein Ablängen der einen oder der mehreren Stangen (2).

**6.** Rohling für ein endodontisches Instrument (1) erhältlich mit einem Verfahren gemäss einem der Ansprüche 1 bis 6 **dadurch gekennzeichnet, dass** von der mindestens einen Stange (2) wegerodiertes Material mindestens partiell als Schicht wieder an die mindestens eine Stange (2) angelagert wird, und wobei die Schicht des wieder angelagerten Materials eine Oberflächenhärte aufweist, die im Wesentlichen 0 bis 8% härter als die Härte des Materials der mindestens einen Stange ist.

**7.** Endodontisches Instrument (1) basierend auf einem Rohling gemäss Anspruch 6, wobei das endodontische Instrument eine Anbringvorrichtung und/oder eine Haltevorrichtung, insbesondere einen Griff (3), aufweist.

**Claims**

**1.** Method for producing blanks for endodontic instruments (1), comprising the steps of

> i) providing at least one rod (2), in particular with a length in the range of 1 to 15 m, preferably 2 to 10 m, particularly preferably 3 to 4 m;
> ii) manufacturing the at least one bar (2) by means of wire erosion technology, wherein an erosion pattern (4) is applied to the at least one bar (2),

wherein that material eroded from the at least one bar (2) is at least partially reattached as a layer to the at least one bar (2), and wherein the layer of reattached material has a surface hardness which is substantially 0 to 8% harder than the hardness of the material of the at least one bar.

**2.** Method according to one of the claims 1 or 2, wherein at least one further erosion pattern is applied to the at least one rod (2), wherein the at least one further erosion pattern is designed in such a way that it produces a different effect, in particular cutting effect, than the first erosion pattern (4) when the endodontic instrument (1) is used as intended.

**3.** Method according to one of the preceding claims, wherein that several rods (2) are eroded simultaneously.

**4.** Method according to any one of the preceding claims, comprising after step ii) a post-treatment of the one or more bars (2) by means of

> - electropolishing; and/or
> - chemical polishing; and/or

- heat treatment to adjust elasticity; and/or
- applying a coating comprising in particular diamond-like carbon (DLC) and/or boron nitride.

**5.** Method according to any one of the preceding claims, comprising, after step ii), cutting the one or more rods (2) to length.

**6.** Blank for an endodontic instrument (1) obtainable by a process according to one of claims 1 to 6, wherein that material eroded away from the at least one rod (2) is at least partially reattached as a layer to the at least one rod (2), and wherein the layer of reattached material has a surface hardness which is substantially 0 to 8% harder than the hardness of the material of the at least one rod

**7.** Endodontic instrument (1) based on a blank according to claim 6, wherein the endodontic instrument comprises an attachment device and/or a holding device, in particular a handle (3).

**Revendications**

**1.** Procédé de fabrication d'ébauches pour instruments endodontiques (1), comprenant les étapes suivantes

> i) mise à disposition d'au moins une barre (2), en particulier d'une longueur comprise dans la plage de 1 à 15 m, de préférence de 2 à 10 m, de manière particulièrement préférée de 3 à 4 m;
> ii) usinage de la au moins une barre (2) au moyen de la technique d'érosion à fil, un motif d'érosion (4) étant appliqué sur la au moins une barre (2),

**caractérisé en ce que** le matériau érodé de ladite au moins une barre (2) est au moins partiellement réappliqué sous forme de couche sur ladite au moins une barre (2), et dans lequel la couche du matériau réappliqué présente une dureté de surface qui est sensiblement de 0 à 8% plus dure que la dureté du matériau de ladite au moins une barre.

**2.** Procédé selon l'une des revendications 1 ou 2, dans lequel au moins un autre motif d'érosion est appliqué sur la au moins une tige (2), le au moins un autre motif d'érosion étant conçu de telle sorte que, lors de l'utilisation conforme de l'instrument endodontique (1), il produit un autre effet, notamment un effet de coupe, que le premier motif d'érosion (4).

**3.** Procédé selon l'une des revendications précédentes, **caractérisé en ce que** plusieurs tiges (2) sont érodées en même temps.

**4.** Procédé selon l'une quelconque des revendications précédentes, comprenant, après l'étape ii), un post-traitement de la ou des barres (2) par

- électropolissage ; et/ou
- un polissage chimique ; et/ou
- un traitement thermique pour ajuster l'élasticité ; et/ou
- l'application d'un revêtement comprenant notamment du carbone di-amond-like (DLC) et/ou du nitrure de bore.

5. Procédé selon l'une quelconque des revendications précédentes, comprenant, après l'étape ii), une mise à longueur de la ou des barres (2).

6. Ébauche pour un instrument endodontique (1) pouvant être obtenue par un procédé selon l'une des revendications 1 à 6, **caractérisée en ce que** le matériau érodé de l'au moins une tige (2) est au moins partiellement réappliqué sous forme de couche sur l'au moins une tige (2), et la couche du matériau réappliqué présentant une dureté de surface qui est essentiellement de 0 à 8% plus dure que la dureté du matériau de l'au moins une tige.

7. Instrument endodontique (1) basé sur une ébauche selon la revendication 6, dans lequel l'instrument endodontique comprend un dispositif de fixation et/ou un dispositif de maintien, en particulier une poignée (3).

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6149501 A

- US 7207111 B2